# EUROPEAN PATENT APPLICATION

(11) **EP 4 380 310 A1**
(43) Date of publication of application: **05.06.2024**
(21) Application number: 22872045.4
(22) Date of filing: 22.09.2022
(51) Int. Cl.: H05B 3/84

(54) **VEHICLE WINDOW ASSEMBLY AND VEHICLE**

(30) Priority: 22.09.2021 CN 202111108661
(71) Applicant: Fuyao Glass Industry Group Co., Ltd., Fuzhou, Fujian 350300 (CN)
(72) Inventor: HONG, Jinquan, Fuzhou, Fujian 350300 (CN); LI, Weijun, Fuzhou, Fujian 350300 (CN); GUAN, Jinliang, Fuzhou, Fujian 350300 (CN)
(74) Representative: Mewburn Ellis LLP
(86) International application number: PCT/CN2022/120434
(87) International publication number: WO 2023/046000

(57) **Abstract**

A vehicle window assembly is provided in the disclosure. The vehicle window assembly includes a vehicle window glass, at least two sensors, and a heater. The vehicle window glass has a functional area, and the functional area has at least two signal transmitting windows spaced apart from each other. The at least two sensors are arranged at an inner side of the vehicle window glass, and positions of the at least two sensors are in a one-to-one correspondence with positions of the at least two signal transmitting windows. The vehicle window glass has a first transparent panel and a second transparent panel, and the heater is arranged between the first transparent panel and the at least two sensors. The heater includes at least one linear heating component, and the at least one linear heating component extends through signal transmitting windows multiple times. With the design arrangement of the heater, the heater can heat multiple signal transmitting windows at the same time. In this way, the process of defogging and defrosting may be accelerated, and the heating areas may be better arranged.

## Description

### CROSS-REFERENCE TO RELATED APPLICATION(S)

This application claims priority to Chinese Patent Application No. 202111108661.2, filed September 22, 2021 to China national intellectual property administration (CNIPA), and entitled "VEHICLE WINDOW ASSEMBLY AND VEHICLE", the entire disclosure of which is hereby incorporated by reference.

### TECHNICAL FIELD

The present disclosure relates to the field of vehicle spare parts, in particular to a vehicle window assembly and a vehicle.

### BACKGROUND

Vehicle has become one of important transport means in people's daily life. Currently, cameras are integrated in front window glass and rear window glass of the vehicle, which provide a broader view for the driver, thereby providing assistance in driving.

A vehicle window glass may be fogged, frosted, or may be faced with other situations when encountering bad weather such as rain, snow, frost, etc., which affects image capture. In this case, cameras may fail to assist the driver in driving. Currently, a camera window on the vehicle window glass is heated by a conductive wire, so as to defog and defrost. However, there are more and more cameras integrated in the vehicle window glass. The design requirement of heating multiple windows cannot be meet, and the arrangement of heating areas is rather poor in the related art.

### SUMMARY

A vehicle window assembly is provided in the disclosure, which can meet the design requirement of heating multiple windows and solve the technical problem of the poor arrangement of hearting areas.

In a first aspect, a vehicle window assembly is provided in the disclosure. The vehicle window assembly includes a vehicle window glass, at least two sensors, and a heater. The vehicle window glass has a functional area, and the functional area has at least two signal transmitting windows spaced apart from each other. The at least two sensors are arranged at an inner side of the vehicle window glass, positions of the at least two sensors are in a one-to-one correspondence with positions of the at least two signal transmitting windows, and the vehicle window glass includes a first transparent panel and a second transparent panel. The heater is arranged between the first transparent panel and the at least two sensors, the heater includes at least one linear heating component, and the at least one linear heating component extends through multiple signal transmitting windows multiple times.

With the design arrangement of the heater, the heater can heat multiple signal transmitting windows at the same time. In this way, the process of defogging and defrosting may be accelerated, and heating areas may be better arranged.

Optionally, the vehicle window assembly further includes a first bus bar, a second bus bar, and an electrical connector. The first bus bar, the second bus bar, and the electrical connector are arranged between the first transparent panel and the second transparent panel. The electrical connector is electrically connected to the first bus bar and the second bus bar, and the electrical connector is configured to transmit an electric current to the heater through the first bus bar and the second bus bar to make the heater heat the at least two signal transmitting windows.

Optionally, the first bus bar has a first end and a second end arranged opposite to the first end, and the second bus bar has a third end and a fourth end arranged opposite to the third end. The heater includes a first heating wire and a second heating wire, one end of the first heating wire is connected to the first end and the other end of the first heating wire is connected to the third end, and one end of the second heating wire is connected to the second end and the other end of the second heating wire is connected to the fourth end.

Optionally, the first heating wire includes multiple first heating portions, multiple second heating portions, and multiple third heating portions. The multiple first heating portions are spaced apart from each other. An orthographic projection of the at least two sensors on the vehicle window glass fully covers an orthographic projection of the multiple first heating portions on the vehicle window glass, at least one of the multiple second heating portions smoothly each connects adjacent first heating portions, and the multiple third heating portions are configured to connect the multiple second heating portions to the first end and the third end. The second heating wire includes multiple fourth heating portions, multiple fifth heating portions, and multiple sixth heating portions. The multiple fourth heating portions are spaced apart from each other. The orthographic projection of the at least two sensors on the vehicle window glass fully covers an orthographic projection of the multiple fourth heating portions on the vehicle window glass, at least one of the multiple fifth heating portions each smoothly connects adjacent fourth heating portions, and the multiple sixth heating portions are configured to connect the multiple fifth heating portions to the second end and the fourth end.

Optionally, the vehicle window glass has a visible region and a non-visible region, the functional area is arranged corresponding to the non-visible region, and at least part of an orthographic projection of the multiple third heating portions and at least part of an orthographic projection of the multiple sixth heating portions on the vehicle window glass are in the visible region.

Optionally, the vehicle window glass has a visible region and a non-visible region, the functional area is arranged corresponding to the non-visible region, and at least part of an orthographic projection of the multiple third heating portions and at least part of an orthographic projection of the multiple sixth heating portions on the vehicle window glass are in the non-visible region respectively at two opposite sides.

Optionally, the first bus bar is arranged in the non-visible region opposite to the functional area, and the second bus bar is arranged in the functional area.

Optionally, the at least one linear heating component each is a mental wire or a carbon fiber wire.

Optionally, a shortest distance between two adjacent sensors ranges from 30mm to 150mm.

Optionally, the vehicle window glass includes a shielding layer and a connecting layer. The shielding layer is arranged at a surface of the first transparent panel close to the connecting layer. The connecting layer is configured to connect the first transparent panel and the second transparent panel. The first bus bar, the second bus bar, and the heater are sandwiched between the connecting layer and the second transparent panel.

Optionally, the first bus bar and the second bus bar each have a single-layer copper foil structure or double-layer copper foil structure.

Optionally, a width of one layer of the double-layer copper foil structure is greater than a width of the other layer of the double-layer copper foil structure.

Optionally, one layer of the double-layer copper foil structure has a width ranging from 5mm to 15mm, the other layer of the double-layer copper foil structure has a width ranging from 3mm to 12mm.

Optionally, the at least one linear heating component each has a diameter ranging from 0.01mm to 0.5mm.

Optionally, the multiple first heating portions pass back and forth through one of the at least two signal transmitting windows, and the multiple fourth heating portions pass back and forth through the other signal transmitting window.

Optionally, a distance a between adjacent first heating portions ranges from 2mm to 15mm, and a distance a between adjacent fourth heating portions ranges from 2mm to 15mm.

Optionally, an included angle between a horizontal line and each of the multiple first heating portions ranges from 0° to 10°.

Optionally, a smallest distance b between an orthographic projection of the multiple third portions and an orthographic projection of a sensor on the vehicle window glass is 3mm. A smallest distance b between an orthographic projection of the multiple sixth heating portions on the vehicle window glass and an orthographic projection of another sensor on the vehicle window glass is 3mm.

Optionally, each of the multiple second heating portions and the multiple fifth heating portions is arc-shaped, and an arc radius c of each of the multiple second heating portions and the multiple fifth heating portions ranges from 2mm to 30mm.

In a second aspect, a vehicle is provided in the disclosure. The vehicle includes a vehicle window assembly of the first aspect and a vehicle frame, and the vehicle window assembly is mounted on the vehicle frame.

### BRIEF DESCRIPTION OF THE DRAWINGS

In order to describe technical solutions in embodiments of the disclosure more clearly, the following will give a brief introduction to the accompanying drawings required for describing embodiments. Apparently, the accompanying drawings hereinafter described are merely some embodiments of the disclosure. Based on these drawings, those of ordinary skill in the art can also obtain other drawings without creative effort.
FIG. 1 is a schematic top view of a vehicle window assembly provided in an embodiment of the disclosure.
FIG. 2 is a schematic partial cross-sectional view of FIG. 1, taken along line I-I.
FIG. 3 is a schematic partial cross-sectional view of a vehicle window assembly provided in an embodiment of the disclosure.
FIG. 4 is a schematic partial enlarged view of a dotted box A in FIG. 1.
FIG. 5 is a schematic top view of a vehicle window assembly provided in another embodiment of the disclosure.
FIG. 6 is a schematic top view of a vehicle window assembly provided in another embodiment of the disclosure.
FIG. 7 is a schematic top view of a vehicle provided in an embodiment of the disclosure.

Explanation of reference signs: vehicle window assembly-1; vehicle window glass-11; functional area-111; signal transmitting window-1111; first transparent panel-112; second transparent panel-113; shielding layer-114; connecting layer-115; visible region-116; non-visible region-117; sensor-12; heater-13; first heating wire-131; first heating portion-1311; second heating portion-1312; third heating portion-1313; second heating wire-132; fourth heating portion-1321; fifth heating portion-1322; sixth heating portion-1323; first bus bar-14; first end-141; second end-142; second bus bar-15; third end-151; fourth end-152; electrical connector-16; vehicle-2; vehicle frame-21.

### DETAILED DESCRIPTION

The following will describe technical solutions of embodiments with reference to the accompanying drawings. Apparently, embodiments described herein are merely some embodiments, rather than all embodiments, of the disclosure. Based on the embodiments described herein, all other embodiments obtained by those of ordinary skill in the art without creative effort shall fall within the protection scope of the disclosure.

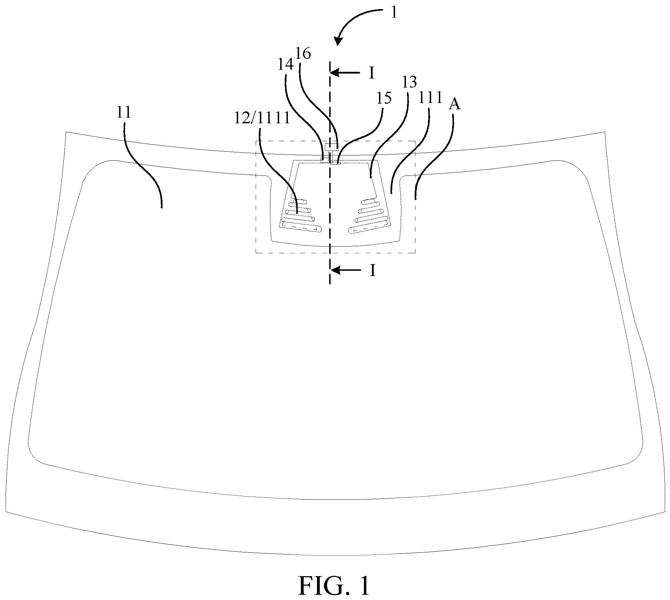

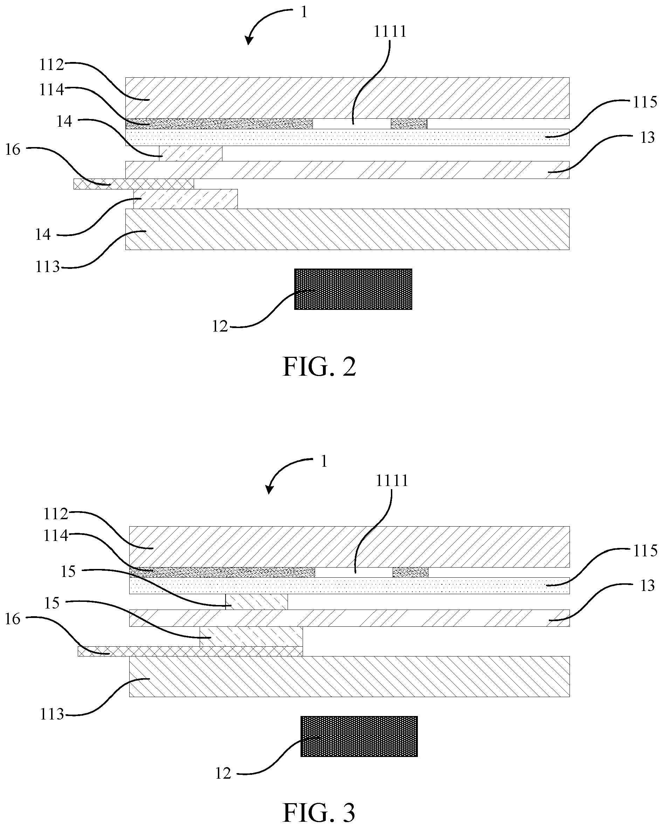

A vehicle window assembly 1 is provided in the disclosure, and reference is made to FIG. 1 and FIG. 2. FIG. 1 is a schematic top view of a vehicle window assembly provided in an embodiment of the disclosure. FIG. 2 is a schematic partial cross-sectional view of FIG. 1, taken along line I-I. The vehicle window assembly 1 includes a vehicle window glass 11, at least two sensors 12, and a heater 13. The vehicle window glass 11 has a functional area 111, and the functional area 111 has at least two signal transmitting windows 1111 spaced apart from each other. The at least two sensors 12 are arranged at an inner side of the vehicle window glass 11, and positions of the at least two sensors 12 are in a one-to-one correspondence with positions of the at least two signal transmitting windows 1111. The vehicle window glass 11 further comprises a first transparent panel 112 and a second transparent panel 113, and the heater 13 is arranged between the first transparent panel 112 and the at least two sensors 12. The heater 13 includes at least one linear heating component, and the at least one linear heating component extends through multiple signal transmitting windows 1111 multiple times.

It can be noted that, the at least two sensors 12 and the heater 13 are illustrated in FIG. 1 in a see-through manner for better observation of the arrangement of the at least two sensors 12 and the heater 13 under the vehicle window glass 11. In the embodiment, the sensor 12 at least includes an image sensor that can acquire images in front of the vehicle window glass 11 through the signal transmitting window 1111. In the embodiment, the signal transmitting window 1111 is trapezoidal, and in other possible embodiments, the signal transmitting window 1111 may also be in other shapes, such as rectangle, triangle, circle, etc., which will not be limited herein.

It can be understood that, under bad weather such as rain, snow, frost, etc., the vehicle window glass 11 is easy to be fogged or frosted, rendering the sensor 12 unable to acquire a clear front view. By heating the vehicle window glass 11, the process of defogging and defrosting may be accelerated, thereby providing a clear front view for the sensor 12.

It can be noted that, the heater 13 is a resistance heating element. The heater 13 will generate a certain amount of heat when an electric current flows through the heater 13. Since the vehicle voltage basically remains constant, the amount of heat generated by the heater 13 normally has a negative correlation with the resistance of the heater 13. Also, considering that at least part of the heater 13 will pass through the signal transmitting window 1111, a heater 13 having a size as small as possible is selected in order to reduce interference on acquiring images by the sensor 12. That is, in the embodiment, a suitable resistance of the heater 13 not only ensures that the heater 13 can generate a certain amount of heat to heat the vehicle window glass 11 when the heater 13 is power-on, but also avoids the interference on acquiring images by the sensor 12.

In the embodiment, the linear heating component has one end connected to a positive pole of a power supply and the other end connected to a negative pole of the power supply, so that an electric current flows through the linear heating component. The at least one linear heating component extends through multiple signal transmitting windows 1111 multiple times to simultaneously heat corresponding signal transmitting windows 1111 on the vehicle window glass 11.

It can be understood that, in the embodiment, with the design arrangement of the heater 13, the heater 13 can heat multiple signal transmitting windows 1111 at the same time. In this way, the process of defogging and defrosting may be accelerated, and the heating areas may be better arranged.

It can be noted that, the thickness of the first transparent panel 112 in a stacking direction ranges from 1.8mm to 3.5mm. The first transparent panel 112 serves as an exterior glass panel of the vehicle window glass 11. The thickness of the second transparent panel 113 in the stacking direction ranges from 0.7mm to 2.5mm. The second transparent panel 113 serves as an interior glass panel of the vehicle window glass 11.

In a possible embodiment, reference is made to FIG. 2, and the vehicle window assembly 1 further includes a first bus bar 14, a second bus bar 15, and an electrical connector 16. The first bus bar 14, the second bus bar 15, and the electrical connector 16 are arranged between the first transparent panel 112 and the second transparent panel 113. The electrical connector 16 is electrically connected to the first bus bar 14 and the second bus bar 15, and the electrical connector 16 is configured to transmit an electric current to the heater 13 through the first bus bar 14 and the second bus bar 15 to make the heater 13 heat the at least two signal transmitting windows 1111.

It can be noted that, the first bus bar 14 and the second bus bar 15 each have a single-layer copper foil structure or double-layer copper foil structure. In the embodiment, as illustrated in FIG. 2, the first bus bar 14 has a double-layer copper foil structure. The first bus bar 14 is sandwiched between the first transparent panel 112 and the second transparent panel 113.

Specifically, there are two electrical connectors 16. The first bus bar 14 is connected to the positive pole of the power supply through one of the two electrical connectors 16, and the second bus bar 15 is connected to the negative pole of the power supply through the other electrical connector 16, and vice versa. In other possible embodiments, the first bus bar 14 is connected to the negative pole of the power supply through one of the two electrical connectors 16, and the second bus bar 15 is connected to the positive pole of the power supply through the other electrical connector 16, which will not be limited herein.

It can be noted that, the vehicle window glass 11 further includes a shielding layer 114 and a connecting layer 115. The shielding layer 114 is arranged at a surface of the first transparent panel 112 close to the connecting layer 115. The connecting layer 115 is configured to connect the first transparent panel 112 and the second transparent panel 113. The first bus bar 14, the second bus bar 15, and the heater 13 are sandwiched between the connecting layer 115 and the second transparent panel 113. Normally, the shielding layer 114 is a dark ink layer that formed on the surface of the first transparent panel 112 by printing or other processes. The shielding layer 114 is configured to shield components behind the shielding layer 114, so that components behind the shielding layer 114 may not be seen from outside the vehicle and the vehicle window assembly 1 may have better-looking. Optionally, an additional shielding layer (not illustrated) may be arranged additionally on at least one surface of the second transparent panel 113, so that components between the first transparent panel 112 and the second transparent panel 113 may not be seen from inside the vehicle and the view of driving will be more concise.

In the embodiment, the first transparent panel 112 serves as an exterior glass panel of the vehicle window glass 11, and the second transparent panel 113 serves as an interior glass panel of the vehicle window glass 11. The material of the connecting layer 115 may be at least one of polyvinyl butyral (PVB), ethylene vinyl acetate (EVA), polyacrylate (PA), polymethyl methacrylate (PMMA), sentryglas^{®} plus (SGP), or polyurethane (PU).

In some possible embodiments, the connecting layer 115 may be integrated with functions such as sound insulation, heat insulation, head up display (HUD), with/without ribbons, etc., which will not be limited herein.

Specifically, in the embodiment, the width of one layer of the first bus bar 14 along a direction perpendicular to the stacking direction in the sectional view ranges from 5mm to 15mm, for example, 5mm, 6mm, 7mm, 8mm, 9mm, 10mm, 11mm, 12mm, 13mm, 14mm, 15mm, etc. The width of the other layer of the first bus bar 14 along the direction perpendicular to the stacking direction in the sectional view ranges from 3mm to 12mm, for example, 3mm, 4mm, 5mm, 6mm, 7mm, 8mm, 9mm, 10mm, 11mm, 12mm. It can be understood that, since one layer of the first bus bar 14 directly connects to the electrical connector 16, the width of one layer of the first bus bar 14 is preferably greater than the width of the other layer of the first bus bar 14 for better electrical connection and more concise wiring.

It can be understood that, in the embodiment, the electrical connector 16 is welded to a side of one layer of the first bus bar 14 facing away from the second transparent panel 113. That is, the electrical connector 16 is sandwiched in the double-layer copper foil structure of the first bus bar 14 or in the double-layer copper foil structure of the second bus bar 15 (not illustrated in FIG. 2) in order to prevent the electrical connector 16 from easily detaching from the layer-structure of the vehicle window assembly 1 during vibration caused by vehicle movement or other situations.

In a possible embodiment, reference is made to FIG. 3, which is a schematic partial cross-sectional view of a vehicle window assembly provided in an embodiment of the disclosure. The second bus bar 15 has a double-layer copper foil structure. The heater 13 is sandwiched in the double-layer copper foil. The electrical connector 16 is arranged on a side of the second bus bar 15 facing away from the heater 13.

Specifically, this embodiment and the previous embodiment are different in arranging positions of the electrical connector 16. It can be understood that, in this embodiment, the electrical connector 16 is welded to a side of the second bus bar 15 close to the second transparent panel 113, so that the heater 13 may directly contact with the second bus bar 15 to have a better electrical connection.

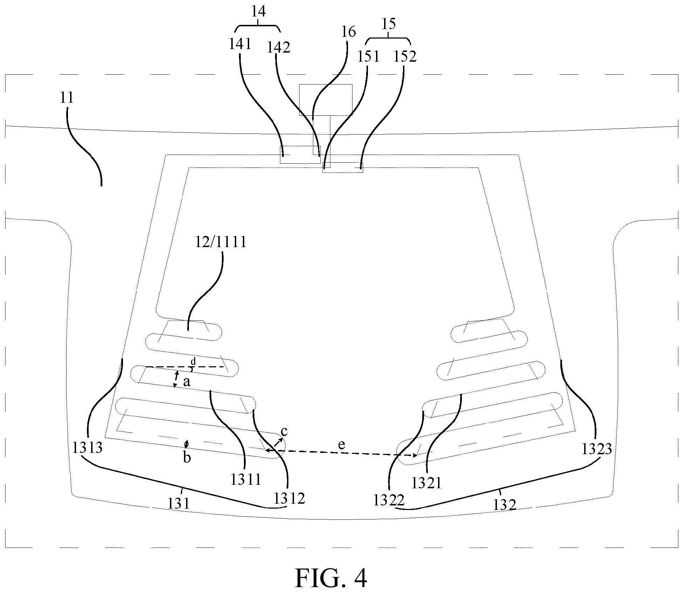

In a possible embodiment, reference is made to FIG. 4, which is a schematic partial enlarged view of a dotted box A in FIG. 1. The first bus bar 14 has a first end 141 and a second end 142 arranged opposite to the first end 141. The second bus bar 15 has a third end 151 and a fourth end 152 arranged opposite to the third end 151. The heater 13 includes a first heating wire 131 and a second heating wire 132. One end of the first heating wire 131 is connected to the first end 141 and the other end of the first heating wire 131 is connected to the third end 151. One end of the second heating wire 132 is connected to the second end 142 and the other end of the second heating wire 132 is connected to the fourth end 152.

Specifically, the first heating wire 131 and the second heating wire 132 are conductive metal wires. Since the first heating wire 131 and the second heating wire 132 are arranged between the first transparent panel 112 and the second transparent panel 113, diameters of the first heating wire 131 and the second heating wire 132 should be in a smaller range, specifically from 0.018mm to 0.15mm, when the first heating wire 131 and the second heating wire 132 are made of tungsten wires. Diameters of the first heating wire 131 and the second heating wire 132 specifically range from 0.08mm to 0.2mm when the first heating wire 131 and the second heating wire 132 are made of enameled wires. It can be understood that, the heating wires made of two materials are able to heat the vehicle window glass 11 corresponding to the signal transmitting window 1111 in order to defog/defrost.

In a possible embodiment, reference is made to FIG. 4, and the first heating wire 131 includes multiple first heating portions 1311, multiple second heating portions 1312, and multiple third heating portions 1313. The multiple first heating portions 1311 are spaced apart from each other. An orthographic projection of the at least two sensors 12 on the vehicle window glass 11 fully covers an orthographic projection of the multiple first heating portions 1311 on the vehicle window glass 11. At least one of the multiple second heating portions 1312 each smoothly connects adjacent first heating portions 1311, and the third heating portion 1313 is configured to connect the multiple second heating portions 1312 to the first end 141 and the third end 151. The second heating wire 132 includes multiple fourth heating portions 1321, multiple fifth heating portions 1322, and multiple sixth heating portions 1323. The multiple fourth heating portions 1321 are spaced apart from each other. The orthographic projection of the at least two sensors 12 on the vehicle window glass 11 fully covers an orthographic projection of the multiple fourth heating portions 1321 on the vehicle window glass 11. At least one of the multiple fifth heating portions 1322 each smoothly connects adjacent fourth heating portions 1321, and the multiple sixth heating portions 1323 are configured to connect the multiple fifth heating portions 1322 to the second end 142 and the fourth end 152.

Specifically, reference is made to FIG. 4. The multiple first heating portions 1311 and the multiple second heating portions 1312 pass back and forth through the signal transmitting window 1111. The multiple fourth heating portions 1321 and the multiple fifth heating portions 1322 pass back and forth through the signal transmitting window 1111. An orthographic projection of the multiple first heating portions 1311 and the multiple second heating portions 1312 on the vehicle window glass 11, and an orthographic projection of the multiple fourth heating portions 1321 and the multiple fifth heating portions 1322 on the vehicle window glass 11, pass through an orthographic projection of the at least two sensors 12 on the vehicle window glass 11 to heat the vehicle window glass 11 corresponding to the at least two sensors 12 for defogging/defrosting. It can be understood that, the multiple first heating portions 1311 and the multiple second heating portions 1312 are wired according to the outline of the signal transmitting window 1111, and the multiple fourth heating portions 1321 and the multiple fifth heating portions 1322 are wired according to the outline of the signal transmitting window 1111. In this way, the vehicle window glass 11 corresponding to the signal transmitting window 1111 can be heated effectively and fast, thereby achieving fast defogging/defrosting.

In the embodiment, a distance a between adjacent first heating portions 1311 ranges from 2mm to 15mm, and a distance a between adjacent fourth heating portions 1321 ranges from 2mm to 15mm. In a case where the signal transmitting window 1111 is small, preferably, the distance a between adjacent first heating portions 1311 may range from 8mm to 10mm, and the distance a between adjacent fourth heating portions 1321 may range from 8mm to 10mm for the same reason. It can be understood that, in order to perform wiring according to the outline of the signal transmitting window 1111, the first heating portion 1311 and the fourth heating portion 1321 each are linear, and an extending length of each of the first heating portion 1311 and the fourth heating portion 1321 changes according to the size of the signal transmitting window 1111. In addition, in order to perform wiring according to the signal transmitting window 1111, in the embodiment, an included angle between a horizontal line and each first heating portion ranges from 0° to 10°. It can be understood that, in other possible embodiments, the shape and angle of each of the first heating portion 1311 and the fourth heating portion 1321 will not be limited by the disclosure.

A smallest distance b between an orthographic projection of the third heating portion 1313 on the vehicle window glass 11 and an orthographic projection of the sensor 12 on the vehicle window glass 11 is 3mm. A smallest distance b between an orthographic projection of the sixth heating portion 1323 on the vehicle window glass 11 and an orthographic projection of the sensor 12 on the vehicle window glass 11 is 3mm. It can be understood that, the orthographic projection of the third heating portion 1313 on the vehicle window glass 11 or the orthographic projection of the sixth heating portion 1323 on the vehicle window glass 11, may fall within the orthographic projection of the sensor 12 on the vehicle window glass 11, or may fall outside the orthographic projection of the sensor 12 on the vehicle window glass11, which will not be limited herein.

Since the second heating portion 1312 is configured to smoothly connect adjacent first heating portions 1311, and the fifth heating portion 1322 is configured to smoothly connect adjacent fourth heating portions 1321, in the embodiment, each of the second heating portion 1312 and the fifth heating portion 1322 is arc-shaped, and an arc radius c of each of the second heating portion 1312 and the fifth heating portion 1322 ranges from 2mm to 30mm. Preferably, the arc radius c of each of the second heating portion 1312 and the fifth heating portion 1322 is 5mm.

It can be noted that, in the embodiment, the first heating wire 131 and the second heating wire 132 are arranged on a surface of the connecting layer 115 facing away from the first transparent panel 112. It can be understood that, in other possible embodiments, the first heating wire 131 and the second heating wire 132 may be arranged on other positions, which will not be limited herein.

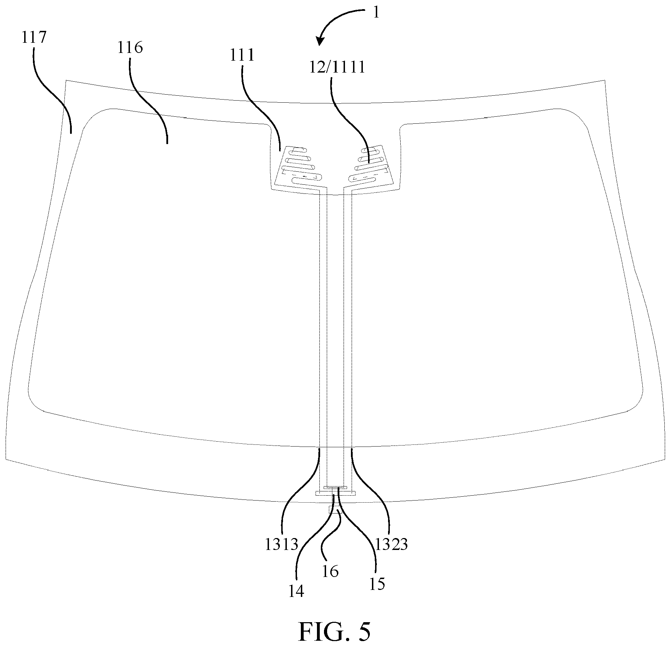

In a possible embodiment, reference is made to FIG. 5, which is a schematic top view of a vehicle window assembly provided in another embodiment of the disclosure. The vehicle window glass 11 has a visible region 116 and a non-visible region 117, the functional area 111 is arranged corresponding to the non-visible region 117, and at least part of an orthographic projection of the third heating portion 1313 and at least part of an orthographic projection of the sixth heating portion 1323 on the vehicle window glass 11 are in the visible region 116.

Specifically, the visible region 116 refers to a region where the inside of the vehicle can be seen directly through the vehicle window glass 11. The non-visible region 117 refers to a region where the inside of the vehicle cannot be seen directly through the vehicle window glass 11. In the embodiment, the first bus bar 14 and the second bus bar 15 are arranged in the non-visible region 117 opposite to the functional area 111.

Since at least part of the orthographic proj ection of the third heating portion 1313 and at least part of the orthographic projection of the sixth heating portion 1323 on the vehicle window glass 11 are in the visible region 116, diameters of the third heating portion 1313 and the sixth heating portion 1323 should not be too large, in order to prevent the third heating portion 1313 and the sixth heating portion 1323 from being obviously seen on the visible region 116 of the vehicle window glass 11. In this way, the view of people and apparatus inside or outside the vehicle may not be affected by the arrangement of the third heating portion 1313 and the sixth heating portion 1323.

Preferably, diameters of the third heating portion 1313 and the sixth heating portion 1323 should not be greater than 0.03mm. Specifically, the diameter of the third heating portion 1313 or the sixth heating portion 1323 may be 0.025mm or 0.027mm when the third heating portion 1313 or the sixth heating portion 1323 is made of tungsten wire. The diameter of the third heating portion 1313 or the sixth heating portion 1323 may be 0.12mm when the third heating portion 1313 or the sixth heating portion 1323 is made of enameled wire. It can be understood that, the diameter of the third heating portion 1313 or the sixth heating portion 1323 made of tungsten wire is smaller than the diameter of the third heating portion 1313 or the sixth heating portion 1323 made of enameled wire. That is, when at least part of the orthographic projection of the third heating portion 1313 and at least part of the orthographic projection of the sixth heating portion 1323 on the vehicle window glass 11 are in the visible region 116, the third heating portion 1313 or the sixth heating portion 1323s made of tungsten wire preferably.

For example, in FIG. 5, an upper edge of the vehicle window glass 11 is referred to as the top of the vehicle window glass 11; a lower edge of the vehicle window glass 11 is referred to as the bottom of the vehicle window glass 11; and a left edge and a right edge of the vehicle window glass 11 are referred to as sides of the vehicle window glass 11.

It can be understood that, compared with the previous embodiment, in this embodiment, the first heating wire 131, the second heating wire 132, the first bus bar 14, and the second bus bar 15 are integrated in the bottom of the vehicle window glass 11. In addition, at least part of the orthographic projection of the third heating portion 1313 and at least part of the orthographic projection of the sixth heating portion 1323 on the vehicle window glass 11 are in the visible region 116, and the third heating portion 1313 and the sixth heating portion 1323 each extends out from a side of the functional area 111 close to the bottom of the vehicle window glass 11. In this way, some technical problems, for example, the electrical connector 16 cannot be arranged due to limited space of the top and the sides of the vehicle window glass 11, can be avoided.

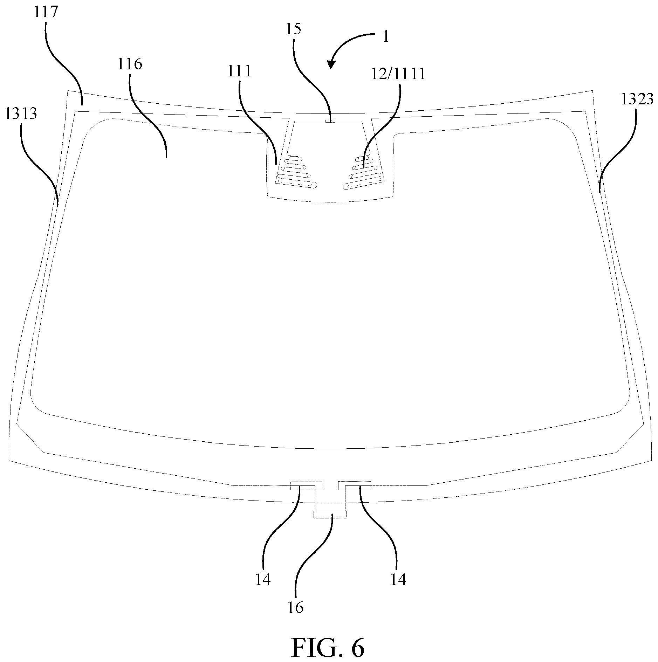

In a possible embodiment, reference is made to FIG. 6, which is a schematic top view of a vehicle window assembly provided in another embodiment of the disclosure. The vehicle window glass 11 has the visible region 116 and the non-visible region 117, the functional area 111 is arranged corresponding to the non-visible region 117, and at least part of the orthographic projection of the third heating portion 1313 and at least part of the orthographic projection of the sixth heating portion 1323 on the vehicle window glass 11 are in the non-visible region 117 respectively at two opposite sides.

It can be understood that, compared with the previous embodiment, in this embodiment, at least part of the orthographic projection of the third heating portion 1313 and at least part of the orthographic projection of the sixth heating portion 1323 on the vehicle window glass 11 are in the non-visible region 117 respectively at two opposite sides. Therefore, diameters of the third heating portion 1313 and the sixth heating portion 1323 are less restricted. In a situation where a designing space of the top of the vehicle window glass 11 is limited and the heater 13 cannot be arranged directly through the visible region 116, the third heating portion 1313 and the sixth heating portion 1323 are led to the bottom of the vehicle window glass 11 through the top and the sides of the vehicle window glass 11 in this embodiment.

In a possible embodiment, the first bus bar 14 is arranged in the non-visible region 117 opposite to the functional area 111, and the second bus bar 15 is arranged in the functional area 111.

It can be noted that, a designing space of the sides of the vehicle window glass 11 is generally small. It can be understood that, in the embodiment, the first bus bar 14 is arranged in the non-visible region 117 opposite to the functional area 111, and the second bus bar 15 is arranged in the functional area 111, thereby reducing part of the third heating portion 1313 and the sixth heating portion 1323 arranged on the sides of the vehicle window glass 11, and ensuring the designing space of the sides of the vehicle window glass 11.

In a possible embodiment, the linear heating component is a metal wire or carbon fiber wire.

Specifically, when the linear heating component is a metal wire, the linear heating component may be one or more selecting from a group consisting of copper wire, tungsten wire, aluminum wire, and copper alloy wire, and the diameter of the linear heating component ranges from 0.01mm to 0.5mm. Preferably, the diameter of the linear heating component ranges from 0.1mm to 0.4mm. Specifically, the diameter of the linear heating component may be 0.17mm, 0.23mm, 0.31mm, 0.39mm, etc., which will not be limited herein.

When the linear heating component is a carbon fiber wire, the diameter of the linear heating component ranges from 0.01mm to 0.5mm. Preferably, the diameter of the linear heating component ranges from 0.1mm to 0.4mm. Specifically, the diameter of the linear heating component may be 0.14mm, 0.21mm, 0.27mm, 0.34mm, etc., which will not be limited herein.

In a possible embodiment, reference is again made to FIG. 4, and the shortest distance between two adjacent sensors 12 ranges from 30mm to 150mm.

Specifically, the vehicle window assembly 1 provided in the disclosure can heat multiple signal transmitting windows 1111 at the same time in order to defog/defrost. It can be understood that, the at least two sensors 12 may be different in terms of functions. Therefore, the vehicle window glass 11 integrated with multiple sensors 12 may have multiple functions. A shortest distance e between two adjacent sensors 12 may range from 30mm to 150mm, in order to prevent the adjacent sensors 12 from interfering with each other and leave room for wiring and arrangement of the heater 13 and other components. Preferably, the shortest distance e between two adjacent sensors 12 ranges from 50mm to 80mm.

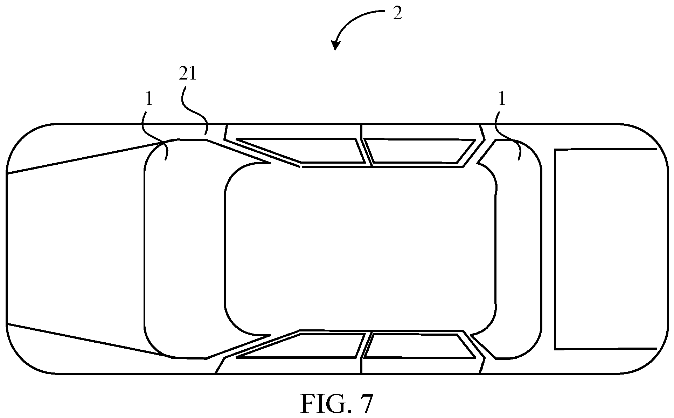

A vehicle 2 is also provided in the disclosure, and reference is made to FIG. 7, which is a schematic top view of a vehicle provided in an embodiment of the disclosure. The vehicle 2 includes the vehicle window assembly 1 as described above and a vehicle frame 21, where the vehicle window assembly 1 is mounted on the vehicle frame 21. Specifically, the vehicle window assembly 1 may be referred to the above description, which will not be repeated herein.

Principles and embodiments of the disclosure are elaborated with specific examples herein. The illustration of embodiments above is only used to help understanding of core ideas of the disclosure. In addition, for those of ordinary skill in the art, according to ideas of the present disclosure, there will be changes in the specific embodiments and application scopes. In summary, contents of this specification should not be understood as limitation on the present disclosure.

## Claims

1. A vehicle window assembly, comprising a vehicle window glass, a heater, and at least two sensors, wherein the vehicle window glass has a functional area, and the functional area has at least two signal transmitting windows spaced apart from each other; the at least two sensors are arranged at an inner side of the vehicle window glass, and positions of the at least two sensors are in a one-to-one correspondence with positions of the at least two signal transmitting windows; the vehicle window glass comprises a first transparent panel and a second transparent panel, and the heater is arranged between the first transparent panel and the at least two sensors; and the heater comprises at least one linear heating component, and the at least one linear heating component extends through a plurality of signal transmitting windows a plurality of times.

2. The vehicle window assembly of claim 1, further comprising a first bus bar, a second bus bar, and an electrical connector, wherein the first bus bar, the second bus bar, and the electrical connector are arranged between the first transparent panel and the second transparent panel, the electrical connector is electrically connected to the first bus bar and the second bus bar, and the electrical connector is configured to transmit an electric current to the heater through the first bus bar and the second bus bar to make the heater heat the at least two signal transmitting windows.

3. The vehicle window assembly of claim 2, wherein the first bus bar has a first end and a second end arranged opposite to the first end, and the second bus bar has a third end and a fourth end arranged opposite to the third end; and the heater comprises a first heating wire and a second heating wire, one end of the first heating wire is connected to the first end and the other end of the first heating wire is connected to the third end, and one end of the second heating wire is connected to the second end and the other end of the second heating wire is connected to the fourth end.

4. The vehicle window assembly of claim 3, wherein the first heating wire comprises a plurality of first heating portions, a plurality of second heating portions, and a plurality of third heating portions, and the plurality of first heating portions are spaced apart from each other; and an orthographic projection of the at least two sensors on the vehicle window glass fully covers an orthographic projection of the plurality of first heating portions on the vehicle window glass, at least one of the plurality of second heating portions each smoothly connects adjacent first heating portions, and the plurality of third heating portions are configured to connect the plurality of second heating portions to the first end and the third end; and
wherein the second heating wire comprises a plurality of fourth heating portions, a plurality of fifth heating portions, and a plurality of sixth heating portions, and the plurality of fourth heating portions are spaced apart from each other; and an orthographic projection of the at least two sensors on the vehicle window glass fully covers an orthographic projection of the plurality of fourth hearting portions on the vehicle window glass, at least one of the plurality of fifth heating portions each smoothly connects adjacent fourth heating portions, and the plurality of sixth heating portions are configured to connect the plurality of fifth heating portions to the second end and the fourth end.

5. The vehicle window assembly of claim 4, wherein the vehicle window glass has a visible region and a non-visible region, the functional area is arranged corresponding to the non-visible region, and at least part of an orthographic projection of the plurality of third heating portions and at least part of an orthographic projection of the plurality of sixth heating portions on the vehicle window glass are in the visible region.

6. The vehicle window assembly of claim 4, wherein the vehicle window glass has a visible region and a non-visible region, the functional area is arranged corresponding to the non-visible region, and at least part of an orthographic projection of the plurality of third heating portions and at least part of an orthographic projection of the plurality of sixth heating portions on the vehicle window glass are in the non-visible region respectively at two opposite sides.

7. The vehicle window assembly of claim 6, wherein the first bus bar is arranged in the non-visible region opposite to the functional area, and the second bus bar is arranged in the functional area.

8. The vehicle window assembly of claim 1, wherein the at least one linear heating component each is a mental wire or a carbon fiber wire.

9. The vehicle window assembly of claim 1, wherein a shortest distance between two adjacent sensors ranges from 30mm to 150mm.

10. The vehicle window assembly of claim 2, wherein the vehicle window glass comprises a shielding layer and a connecting layer, the shielding layer is arranged at a surface of the first transparent panel close to the connecting layer, and the connecting layer is configured to connect the first transparent panel and the second transparent panel; and the first bus bar, the second bus bar, and the heater are sandwiched between the connecting layer and the second transparent panel.

11. The vehicle window assembly of claim 2, wherein the first bus bar and the second bus bar each have a single-layer copper foil structure or double-layer copper foil structure.

12. The vehicle window assembly of claim 11, wherein a width of one layer of the double-layer copper foil structure is greater than a width of the other layer of the double-layer copper foil structure.

13. The vehicle window assembly of claim 11, wherein one layer of the double-layer copper foil structure has a width ranging from 5mm to 15mm, and the other layer of the double-layer copper foil structure has a width ranging from 3mm to 12mm.

14. The vehicle window assembly of claim 8, wherein the at least one linear heating component each has a diameter ranging from 0.01mm to 0.5mm.

15. The vehicle window assembly of claim 4, wherein the plurality of first heating portions pass back and forth through one of the at least two signal transmitting windows, and the plurality of fourth heating portions pass back and forth through the other one of the at least two signal transmitting windows.

16. The vehicle window assembly of claim 4, wherein a distance a between adjacent first heating portions ranges from 2mm to 15mm, and a distance a between adjacent fourth heating portions ranges from 2mm to 15mm.

17. The vehicle window assembly of claim 4, wherein an included angle between a horizontal line and each of the plurality of first heating portions ranges from 0° to 10°.

18. The vehicle window assembly of claim 4, wherein a smallest distance b between an orthographic projection of the plurality of third heating portions on the vehicle window glass and an orthographic projection of a sensor on the vehicle window glass is 3mm and a smallest distance b between an orthographic projection of the plurality of sixth heating portions on the vehicle window glass and an orthographic projection of another sensor on the vehicle window glass is 3mm.

19. The vehicle window assembly of claim 4, wherein each of the plurality of second heating portions and the plurality of fifth heating portions is arc-shaped, and an arc radius c of each of the plurality of second heating portions and the plurality of fifth heating portions ranges from 2mm to 30mm.

20. A vehicle, comprising a vehicle window assembly of any one of claims 1 to 19 and a vehicle frame, wherein the vehicle window assembly is mounted on the vehicle frame.
